# FASCICULE DE BREVET EUROPEEN

(11) **EP 2 852 001 B1**
(45) Date de publication et mention de la délivrance du brevet: **07.12.2016**
(21) Numéro de dépôt: 14181460.8
(22) Date de dépôt: 19.08.2014
(51) Int. Cl.: H01B 12/16, H01F 6/06, H01R 4/68, H02G 15/34

(54) **Jonction de câbles supraconducteurs**
Verbindungsvorrichtung für supraleitende Kabel
Superconducting cable joint

(30) Priorité: 19.09.2013 FR 1359022
(43) Date de publication de la demande: 25.03.2015
(73) Titulaire: Nexans, 75008 Paris (FR)
(72) Inventeur: Delplace, Sébastien, 59279 Loon-Plage (FR); Lallouet, Nicolas, 62132 Fiennes (FR)
(74) Mandataire: Lenne, Laurence

(56) Documents cités:
- EP-A1- 1 489 691
- WO-A2-2009/000269
- GB-A- 2 350 495
- JP-A- H0 955 241
- JP-A- 2010 020 970

## Description

L'invention concerne une jonction de câbles supraconducteurs.

Elle se rapporte plus précisément à une jonction de deux câbles aboutés, chaque câble comprenant autour d'un support central au moins une couche de phase constituée d'au moins une couche de matériau supraconducteur et une couche de neutre concentriques et contenue dans une enveloppe remplie de fluide cryogénique.

Il est connu du document de brevet EP 2 006 862 d'utiliser trois câbles monophasés pour chaque câble et de connecter deux câbles de même phase aboutés. Les deux couches de phase aboutées de matériau supraconducteur sont alors connectées par un élément conducteur central recouvert d'une couche de matériau isolant complémentaire.

L'invention concerne également des câbles comprenant autour d'un support central trois phases concentriques constituées chacune d'au moins une couche de matériau supraconducteur, ces couches étant séparées par une couche de matière isolante.

L'ensemble de chaque câble peut être recouvert d'un écran connecté au neutre et d'une gaine externe, comme décrit dans le document de brevet US 2010/0184604. De tels câbles sont contenus dans une enveloppe remplie de fluide cryogénique, en général de l'azote liquide. Ce dernier document décrit une jonction de câbles complexe et longue à réaliser consistant à reconstituer les couches en matériau supraconducteur et les couches de matière isolante grâce à un agencement en étages avec superposition.

Le document JPH0955241 décrit une jonction de deux câbles aboutés. Les couches externes de deux couches supraconducteurs sont chacune connectées par un fil conducteur à une couche différente de la connexion.

Le document JP 2010020170 décrit une jonction de deux câbles aboutés, chaque câble comprenant autour d'un support central trois couches de matériau supraconducteur concentriques et un organe support de pontage.

Le document EP1489691 décrit une jonction de deux câbles aboutés, chaque câble comprenant autour d'un support central au moins une couche de phase constituée d'au moins une couche de matériau supraconducteur contenue dans une enveloppe remplie de fluide cryogénique.

L'invention concerne une jonction de deux câbles aboutés, chaque câble comprenant autour d'un support central au moins une couche de phase constituée d'au moins une couche de matériau supraconducteur et une couche de neutre concentriques, fiable et de fabrication aisée.

Pour ce faire, l'invention propose une jonction de deux câbles aboutés, chaque câble comprenant autour d'un support central au moins une couche de phase constituée d'au moins une couche de matériau supraconducteur et une couche de neutre concentriques et étant contenue dans une enveloppe remplie de fluide cryogénique, lesdites couches de phase internes aboutés étant dénudées et étant directement connectés, caractérisée en ce que ladite couche de neutre de chaque câble est également dénudée, au moins un organe support de pontage est disposé entre lesdites couches de neutre dénudées et une couche de matériau conducteur ou supraconducteur de connexion électrique de ces couches de neutre est disposée sur le dit organe support de pontage.

Selon un mode de réalisation préféré, ledit organe support est constitué d'un élément de pontage en matière isolante tubulaire et biseauté à ses extrémités.

Très avantageusement, un espace cylindrique longitudinal rempli de fluide cryogénique est disposé entre la jonction desdites couches de matériau supraconducteur de phase internes et l'organe support de pontage.

Selon ce mode de réalisation, la réalisation de la jonction exploite les propriétés diélectriques du fluide cryogénique contenu dans l'enceinte.

Lesdits organes supports de pontage peuvent être au moins partiellement en métal et/ou au moins partiellement en matière isolante.

De préférence, chaque câble comprend autour d'un support central trois couches de phases concentriques constituées chacune d'au moins une couche de matériau supraconducteur et une couche de neutre, ces couches étant séparées par une couche de matière isolante, lesdites couches de matériau supraconducteur de phase les plus internes aboutés étant dénudées et étant directement connectés, et lesdites couches de matériau supraconducteur sont dénudées de façon étagée, de la phase la plus interne au neutre en s'éloignant de l'extrémité de jonction, un organe support de pontage est disposé entre chaque autre même couche de phase ou de neutre dénudée et une couche de matériau conducteur ou supraconducteur de connexion électrique des mêmes couches de phase ou de neutre est disposée sur chaque organe support.

Selon un mode de réalisation préféré, lesdits organes supports sont chacun constitués d'un élément de pontage en matière isolante tubulaire et biseauté à ses extrémités.

Très avantageusement, un espace tubulaire longitudinal rempli de fluide cryogénique est disposé entre lesdites couches les plus internes de matériau supraconducteur de phase et l'organe support de pontage suivant et un espace tubulaire longitudinal rempli de fluide cryogénique est disposé également entre chaque organe support de pontage et chaque dite couche de matériau conducteur ou supraconducteur de connexion électrique disposée sur l'organe support de pontage plus interne.

Lesdits organes supports de pontage peuvent être au moins partiellement en métal et/ou au moins partiellement en matière isolante.

Ladite matière isolante est de préférence du papier.

Ledit métal est de préférence de l'aluminium ou de l'acier inoxydable.

Très avantageusement, lesdits organes supports de pontage sont préfabriqués.

Cette préfabrication est particulièrement avantageuse, car elle assure une réalisation de la jonction très facile et rapide et également permet une grande sécurité en haute tension en particulier, les éléments préfabriqués présentant des formes et des dimensions précises indépendantes d'erreurs ou d'approximations humaines.

De préférence, chaque dite couche de matériau conducteur ou supraconducteur de connexion électrique est constituée de fils ou de rubans posées de façon répartie sur ledit élément de pontage.

Et avantageusement, chaque dite couche de connexion électrique est en matériau supraconducteur.

Ainsi, les connexions électriques dans l'ensemble de la jonction sont pratiquement uniquement supraconductrices, les résistances de connexion entre fils ou rubans étant extrêmement faibles à température cryogénique. La jonction permet donc une quasi-continuité de la propriété supraconductrice du câble avec quasiment aucune perte par effet Joule. Cela permet de réduire les pertes du système tout d'abord mais également de réduire considérablement les risques d'échauffement local par rapport à une connexion résistive qui pourrait entraîner une transition locale du cable hors de sa température critique menant à une destruction possible.

De plus, l'encombrement de cette connexion avec des fils ou rubans supraconducteurs en cuivre est inférieur à celui de la même connexion avec rubans ou fils résistifs en cuivre.

L'invention est décrite ci-après plus en détail à l'aide de figures représentant des modes de réalisation préférées de l'invention.
Les figures 1 à 5 sont des vues en coupe longitudinale de modes de réalisation de l'invention.
Les figures 6 et 7 sont des vues en perspective partielles de deux modes de réalisation préférés.

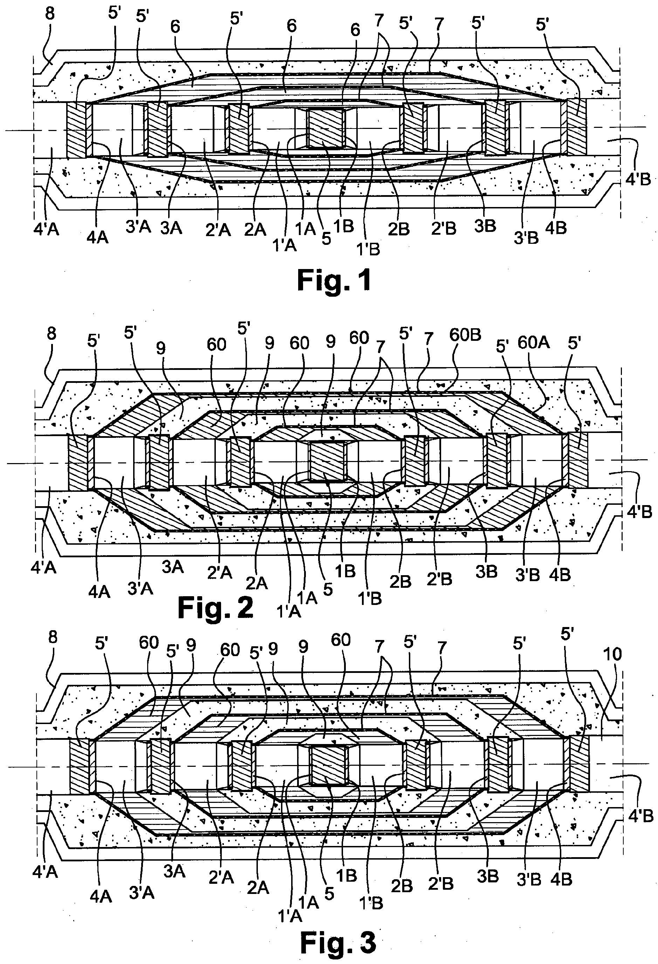

La figure 1 représente un premier mode de réalisation conforme à l'invention.

Ce premier mode de réalisation concerne une jonction de deux câbles aboutés, chaque câble comprenant autour d'un support central trois couches de phases concentriques 1A, 2A, 3A, 1 B, 2B, 3B constituées chacune d'au moins une couche de matériau supraconducteur, ces couches étant séparées par une couche de matière isolante 1'A, 2'A, 3'A, 1'B, 2'B, 3'B. Une couche de neutre 4A, 4B est ici elle-même revêtue d'une gaine isolante 4'A, 4'B mais cette gaine isolante peut ne pas exister. Cette couche de neutre 4A, 4B peut comporter une couche de matériau supraconducteur ou une couche de matériau conducteur résistif classique, tell.e que du cuivre. Dans ce qui suit, il sera supposé que la couche de neutre 4A, 4B comporte une couche de matériau supraconducteur.

Les câbles et leur connexion sont contenus dans une enveloppe 8 remplie de fluide cryogénique.

Les couches de matériau supraconducteur de phase les plus internes aboutés 1A, 1B ou première phase sont dénudées et sont ici directement connectés par une connexion électrique 5 du type manchon conducteur. Ce manchon peut également contenir des rubans supraconducteurs qui assurent une liaison supraconductrice entre les couches en matériau supraconducteur des deux câbles.

Les couches de matériau supraconducteur sont dénudées de façon étagée, de la phase la plus interne 1A, 1B à la phase la plus externe qui est la couche de neutre 4A, 4B en s'éloignant de l'extrémité de connexion. Un organe support de pontage 6 est disposé entre chaque autre même couche de phase ou de neutre dénudée 2A, 3A, 4A, 2B, 3B, 4B et une couche de matériau conducteur ou supraconducteur 7 de connexion électrique des mêmes phases ou de neutre est disposée sur chaque organe support.

Cette couche de matériau conducteur ou supraconducteur 7 peut être constituée de rubans supraconducteurs, de rubans en cuivre ou/et de tresses ou treillis en cuivre. La connexion électrique à chaque extrémité de ces couches additionnelles 7 est réalisée par un organe conducteur 5', de préférence un manchon conducteur rempli d'alliage de brasure de type étain.

Les organes supports 6 sont chacun constitués d'un élément de pontage en matière isolante tubulaire et biseauté à ses extrémités. Ils sont de préférence en papier en bande enroulée autour des câbles.

Ces éléments de pontage 6 remplissent tout l'espace compris entre les couches de matériau conducteur ou supraconducteur 7 et ont pour fonction de supporter mécaniquement les couches de matériau conducteur ou supraconducteur 7 et également d'isoler électriquement la jonction électrique de chaque phase et du neutre.

Ce premier mode de réalisation peut s'appliquer également à une jonction de deux câbles mono-phasés.

La figure 2 représente un deuxième mode de réalisation conforme à l'invention.

Les éléments constitutifs identiques au mode de réalisation précédent ne sont pas repris.

Selon ce mode de réalisation, un espace tubulaire longitudinal 9 rempli de fluide cryogénique est disposé entre les couches les plus internes 1A, 1 B de matériau supraconducteur de phase et l'organe support de pontage suivant 60 et un espace tubulaire longitudinal rempli de fluide cryogénique 9 est disposé également entre chaque organe support de pontage 60 et chaque couche de matériau conducteur ou supraconducteur de connexion électrique 7 disposée sur l'organe support de pontage 60 plus interne.

Les organes supports de pontage 60 sont formés d'une partie d'extrémité tronconique 60A et d'une partie cylindrique tubulaire droite 60B.

Selon ce mode de réalisation, ils sont en métal, par exemple en aluminium ou en acier inoxydable, et sont préfabriqués chacun en deux demi-organes demi tubulaires mis en place de part et d'autre sur la longueur de la connexion.

La figure 3 représente un troisième mode de réalisation conforme à l'invention.

Les éléments constitutifs identiques au mode de réalisation précédent ne sont pas repris.

Selon ce mode de réalisation, les organes de pontage 60 sont en matière isolante, par exemple en papier, et peuvent être préfabriqués chacun en deux demi-organes demi tubulaires mis en place de part et d'autre sur la longueur de la connexion.

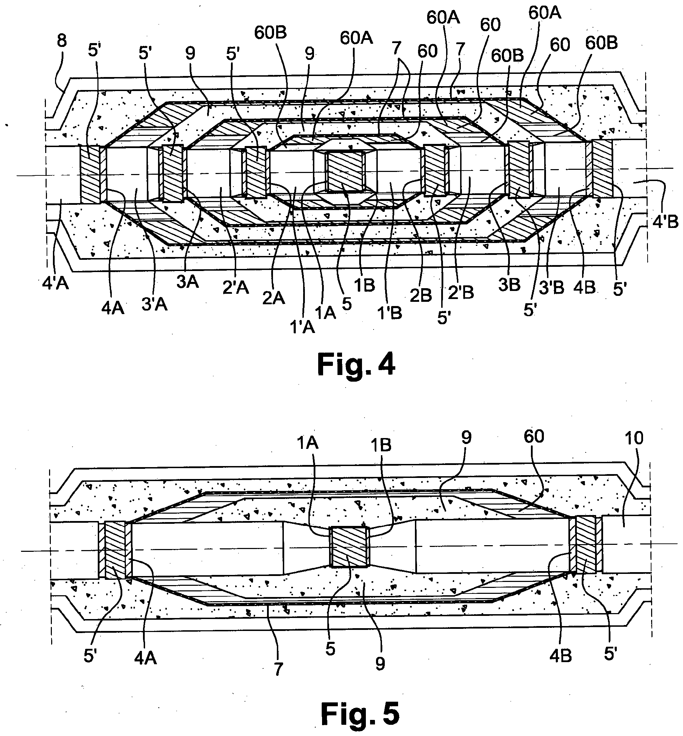

La figure 4 représente un quatrième mode de réalisation conforme à l'invention.

Les éléments constitutifs identiques au mode de réalisation précédent ne sont pas repris.

Selon ce mode de réalisation, les organes de pontage 60 sont partiellement en matière isolante 60B, par exemple en papier, et partiellement en métal 60A, par exemple en aluminium ou en acier inoxydable, et de préférence sont préfabriqués chacun en deux demi-organes demi tubulaires mis en place de part et d'autre sur la longueur de la connexion.

La figure 5 représente un autre mode de réalisation conforme à l'invention.

Les deux câbles aboutés sont ici monophasés et chaque câble comprend autour d'un tube support central une couche de phase constituée d'au moins une couche de matériau supraconducteur et une couche de neutre et contenue dans une enveloppe remplie de fluide cryogénique.

Les couches de matériau supraconducteur de phase interne aboutés 1A, 1B sont dénudées et sont directement connectés par une connexion électrique 5 du type manchon conducteur.

La couche de matériau supraconducteur de neutre 4A, 4B de chaque câble est également dénudée, un organe support de pontage 60 est disposé entre les couches de matériau supraconducteur de neutre dénudées et une couche de matériau conducteur ou supraconducteur 7 de connexion électrique de ces couches dé matériau supraconducteur de neutre 4A, 4B est disposée sur l'organe support de pontage 60.

Un espace tubulaire longitudinal 9 rempli de fluide cryogénique est disposé entre la connexion des couches de matériau supraconducteur de phase 1 A, 1 B et l'organe support de pontage 60.

Cet organe support de pontage 60 peut être en métal et/ou en matière isolante, par exemple en aluminium ou en acier inoxydable et/ou en papier et de préférence est préfabriqué en deux demi-organes demi tubulaires mis en place de part et d'autre sur la longueur de la connexion.

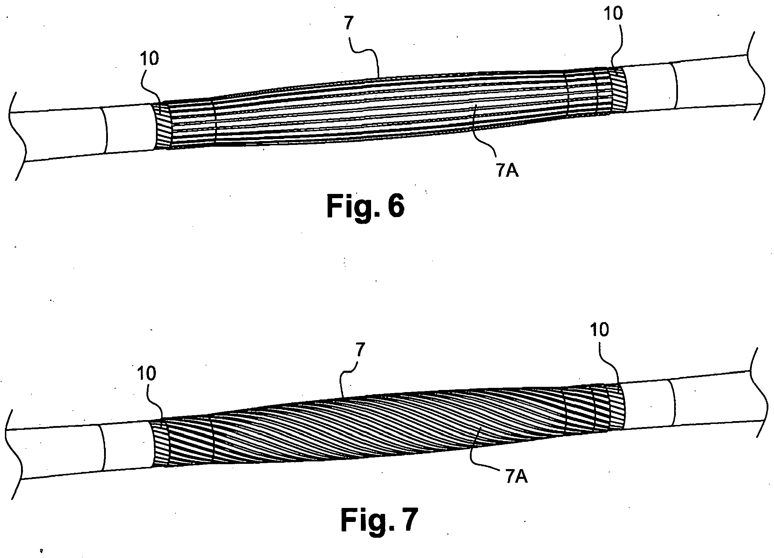

Les figures 6 et 7 représentent deux modes de réalisation préférés des couches de connexion électrique 7.

Chaque couche de matériau conducteur ou supraconducteur de connexion électrique 7 est constituée de fils ou de rubans 7A posés sur l'élément de pontage correspondant 6, 60 de façon régulièrement répartie sur la surface de celui-ci.

Ces conducteurs 7A sont en nombre préférentiellement égal au nombre de rubans supraconducteurs 10 à connecter dans la couche de phase 1A, 2A, 3A, 1 B, 2B, 3B ou la couche de neutre 4A, 4B correspondante du câble. Un ruban ou un fil 7A est connecté à chaque extrémité à un ruban de la couche de phase ou de neutre du câble correspondante. Ces fils ou rubans supraconducteurs 7A préférentiellement présentent un courant critique supérieur à celui des rubans 10 constituant la couche de phase ou de neutre à connecter.

De préférence, chaque couche de connexion électrique 7 est en matériau supraconducteur, par exemple des rubans 7A supraconducteurs haute tem pérature de type BSCCO ou YBCO.

Ce peut être également des conducteurs en cuivre en nombre au moins égal au nombre de rubans supraconducteurs 10 à connecter dans la couche de phase ou de neutre correspondante. Dans ce cas, la section totale du matériau résistif tel que le cuivre pour le passage du courant est déterminé pour éviter tout échauffement dans la jonction.

Selon le mode de réalisation représenté sur la figure 6, les rubans 7A sont disposés parallèlement à l'axe longitudinal de la jonction et sont jointifs aux extrémités de l'élément de pontage à leur connexion avec les rubans supraconducteur 10.

Selon le mode de réalisation représenté sur la figure 7, les rubans 7A sont disposés enroulés autour de l'élément de pontage correspondant et sont jointifs aux extrémités de l'élément de pontage à leur connexion avec les rubans supraconducteur 10.

## Revendications

1. Jonction de deux câbles aboutés, chaque câble comprenant autour d'un support central trois couches de phases concentriques constituées chacune d'au moins une couche de matériau supraconducteur et une couche de neutre (1A, 2A, 3A, 4A, 1B, 2B, 3B, 4B), ces couches étant séparées par une couche de matière isolante (1'A, 2'A, 3'A, 1'B, 2'B, 3'B), lesdites couches de matériau supraconducteur étant dénudées de façon étagée, de la phase la plus interne (1A, 1B) au neutre (4A, 4B) en s'éloignant de l'extrémité de connexion, un organe support de pontage (6, 60) étant disposé entre une même couche de phase ou de neutre (2A, 3A, 4A, 2B, 3B, 4B) dénudée et une couche de matériau conducteur ou supraconducteur (7) de connexion électrique des mêmes couches de phase ou de neutre étant disposée sur ledit organe support (6, 60), jonction en ce que lesdites couches de matériau supraconducteur de phase les plus internes (1A, 1B) aboutés sont dénudées et sont directement connectées, **caractérisée en ce que** un dit organe support de pontage (6, 60) est disposé entre chaque autre même couche de phase ou de neutre (2A, 3A, 4A, 2B, 3B, 4B) dénudée et une couche de matériau conducteur ou supraconducteur (7) de connexion électrique des mêmes couches de phase ou de neutre est disposée sur chaque organe support (6, 60).

2. Jonction selon la revendication 1, caractérisée en ce lesdits organes supports sont chacun constitués d'un élément de pontage (6) en matière isolante tubulaire et biseauté à ses extrémités.

3. Jonction selon la revendication 1, **caractérisée en ce qu'**un espace tubulaire longitudinal (9) rempli de fluide cryogénique est disposé entre lesdites couches les plus internes de matériau supraconducteur de phase (1A, 1B) et l'organe support de pontage suivant (60) et un espace cylindrique longitudinal (9) rempli de fluide cryogénique est disposé également entre chaque organe support de pontage (60) et chaque dite couche de matériau conducteur ou supraconducteur de connexion électrique disposée sur l'organe support de pontage plus interne.

4. Jonction selon la revendication 3, **caractérisée en ce que** lesdits organes supports de pontage (60) sont au moins partiellement en métal.

5. Jonction selon la revendication 3 ou 4, **caractérisée en ce que** lesdits organes supports de pontage (60) sont au moins partiellement en matière isolante.

6. Jonction selon l'une des revendications 2 ou 5, **caractérisée en ce que** ladite matière isolante est du papier.

7. Jonction selon la revendication 4, **caractérisée en ce que** ledit métal est de l'aluminium ou de l'acier inoxydable.

8. Jonction selon l'une des revendications précédentes, **caractérisée en ce que** lesdits organes supports de pontage (6, 60) sont préfabriqués.

9. Jonction selon l'une des revendications précédentes, **caractérisée en ce que** chaque dite couche de matériau conducteur ou supraconducteur de connexion électrique est constituée de fils ou de rubans posés de façon répartie sur ledit élément de pontage.

10. Jonction selon la revendication précédente, **caractérisée en ce que** chaque dite couche de connexion électrique est en matériau supraconducteur.

## Patentansprüche

1. Verbindungsvorrichtung für zwei aneinander anstoßende Kabel, wobei jedes Kabel um einen zentralen Träger drei Schichten konzentrischer Phasen umfasst, die jede von mindestens einer Schicht eines supraleitenden Materials und einer Nullleiterschicht (1 A, 2A, 3A, 4A, 1 B, 2B, 3B, 4B) gebildet sind, wobei diese Schichten von einer Schicht eines Isolationsmaterials (1'A, 2'A, 3'A, 1'B, 2'B, 3'B) getrennt sind, wobei die Schichten aus supraleitendem Material von der innersten Phase (1 A, 1B) zum Nullleiter (4A, 4B) bei gleichzeitigem Entfernen vom Verbindungsende stufig abisoliert sind, wobei ein Überbrückungsstützorgan (6, 60) zwischen einer selben abisolierten Phasen- oder Nullleiterschicht (2A, 3A, 4A, 2B, 3B, 4B) und einer elektrisch leitenden oder supraleitenden Verbindungsmaterialschicht (7) derselben Phasen- oder Nullleiterschichten auf dem Überbrückungsstützorgan (6, 60) angeordnet ist, wobei die innersten (1 A, 1B) aneinander anstoßenden Phasenschichten aus supraleitendem Material abisoliert und direkt verbunden sind, **dadurch gekennzeichnet, dass** ein Überbrückungsstützorgan (6, 60) zwischen jeder anderen selben abisolierten Phasen- oder Nullleiterschicht (2A, 3A, 4A, 2B, 3B, 4B) und einer elektrisch leitenden oder supraleitenden Verbindungsmaterialschicht (7) derselben Phasen- oder Nulleiterschichten auf jedem Stützorgan (6, 60) angeordnet ist.

2. Verbindungsvorrichtung nach Anspruch 1, **dadurch gekennzeichnet, dass** die Stützorgane (6) alle von einem Überbrückungselement (6) aus rohrförmigem und an seinen Enden abgeschrägtem Isolationsmaterial gebildet sind.

3. Verbindungsvorrichtung nach Anspruch 1, **dadurch gekennzeichnet, dass** ein länglicher rohrförmiger, mit Kühlfluid gefüllter Raum (9) zwischen den innersten Phasenschichten aus supraleitendem Material (1 A, 1B) und dem nächsten Überbrückungsstützorgan (60) angeordnet ist und ein länglicher rohrförmiger, mit Kühlfluid gefüllter Raum (9) ebenfalls zwischen jedem Überbrückungsstützorgan (60) und jeder elektrisch leitenden oder supraleitenden Verbindungsmaterialschicht angeordnet ist, die auf dem innersten Überbrückungsstützorgan angeordnet ist.

4. Verbindungsvorrichtung nach Anspruch 3, **dadurch gekennzeichnet, dass** die Überbrückungsstützorgane (60) zumindest teilweise aus Metall sind.

5. Verbindungsvorrichtung nach Anspruch 3 oder 4, **dadurch gekennzeichnet, dass** die Überbrückungsstützorgane (60) zumindest teilweise aus Isolationsmaterial sind.

6. Verbindungsvorrichtung nach einem der Ansprüche 2 oder 5, **dadurch gekennzeichnet, dass** das Isolationsmaterial Papier ist.

7. Verbindungsvorrichtung nach Anspruch 4, **dadurch gekennzeichnet, dass** das Metall Aluminium oder rostfreier Stahl ist.

8. Verbindungsvorrichtung nach einem der vorangehenden Ansprüche, **dadurch gekennzeichnet, dass** die Überbrückungsstützorgane (6, 60) vorgefertigt sind.

9. Verbindungsvorrichtung nach einem der vorangehenden Ansprüche, **dadurch gekennzeichnet, dass** jede elektrisch leitende oder supraleitende Verbindungsmaterialschicht aus Drähten oder Bändern gebildet ist, die auf dem Überbrückungselement verteilt angeordnet sind.

10. Verbindungsvorrichtung nach vorangehendem Anspruch, **dadurch gekennzeichnet, dass** jede elektrische Verbindungsschicht aus supraleitendem Material ist.

## Claims

1. A junction for two married cables, each cable comprising, around a central support, three concentric phase layers each made up of at least one superconductor material and one neutral layer (1 A, 2A, 3A, 4A, 1B, 2B, 3B, 4B), these layers being separated by a layer of insulating material (1'A, 2'A, 3'A, 1'B, 2'B, 3'B), said layers of superconductor material being stripped in a stepped manner, from the innermost phase (1 A, 1B) to the neutral (4A, 4B) moving away from the connecting end, a bridging support member (6, 60) being arranged between a same stripped phase or neutral layer (2A, 3A, 4A, 2B, 3B, 4B) and a layer of conducting or superconducting material (7) for electrical connection of the same phase or neutral layers being arranged on said support member (6, 60), junction in that said innermost layers of spliced superconducting phase material (1 A, 1 B) are stripped and are directly connected, **characterized in that** a so-called bridging support member (6, 60) is arranged between each other same stripped phase or neutral layer (2A, 3A, 4A, 2B, 3B, 4B) and a layer of conductor or superconductor material (7) for electrical connection of the same phase or neutral layers is arranged on each support member (6, 60).

2. The junction according to claim 1, **characterized in that** said support members are each made up of a bridging element (6) made from an insulating material, tubular and beveled at its ends.

3. The junction according to claim 1, **characterized in that** a longitudinal tubular space (9) filled with cryogenic fluid is arranged between said innermost layers of superconducting phase material (1 A, 1B) and the following bridging support member (60) and a longitudinal cylindrical space (9) filled with cryogenic fluid is also arranged between each bridging support member (60) and each said layer of conductor or superconductor material for electrical connection arranged on the innermost bridging support member.

4. The junction according to claim 3, **characterized in that** said bridging support members (60) are at least partially made from metal.

5. The junction according to claim 3 or 4, **characterized in that** said bridging support members (60) are at least partially made from insulating material.

6. The junction according to one of claims 2 or 5, **characterized in that** said insulating material is paper.

7. The junction according to claim 4, **characterized in that** said metal is aluminum or stainless steel.

8. The junction according to one of the preceding claims, **characterized in that** said bridging support members (6, 60) are prefabricated.

9. The junction according to one of the preceding claims, **characterized in that** each said layer of conductor or superconductor material for electrical connection is made up of wires or tapes placed distributed on said bridging element.

10. The junction according to the preceding claim, **characterized in that** each said electrical connecting layer is made from a superconducting material.
